# EUROPEAN PATENT APPLICATION

(11) **EP 3 594 520 A1**
(43) Date of publication of application: **15.01.2020**
(21) Application number: 19179251.4
(22) Date of filing: 10.06.2019
(51) Int. Cl.: F16D 3/38

(54) **A FLANGE YOKE**

(30) Priority: 12.06.2018 TR 201808362
(71) Applicant: Tirsan Kardan Sanayi Ve Ticaret Anonim Sirketi, Yunusemre - Manisa (TR)
(72) Inventor: DAVAZLI, Sebahattin, Manisa (TR)
(74) Representative: Yamankaradeniz, Kemal

(57) **Abstract**

Invention is about the flange yoke (A) attaching the propshaft (B), which provides the rotational motion and power transmission between differential and transmission in motor vehicles, to the vehicle via connection surfaces (20) formed by machining assembly bases (10) by cutting tools (C). Involves surface discharges (31) formed on flange yoke (A) side surfaces (30) not to allow the cutting tool (C) to contact cutting diameter during machining of mentioned connection surfaces (20).

## Description

### Technical Field

The invention is about changing the design and improving machinability of side surface design of flange yoke on the propshaft which provides the rotational motion and power transmission between differential and transmission in motor vehicles.

The invention especially involves flange yoke structure which creates a discharge on the side surface which cutting tool contacts during machining of flange yoke connection surface, reduces production time and energy costs, and extends service life of cutting tools.

### Prior Art

Today the drive shaft, which is used as a driveline component on various motor vehicles, transfers the rotational motion, coming from engine to transmission, to the differential. The flange yoke, which allows the drive shaft to be connected on the vehicle to operate as needed, is connected from both ends of the drive shaft to fix on the vehicle. The bolt faces of the bolts used for connection of flange yoke on the vehicle is machined before drilling the hole by working on the assembly base of the flange yoke. However, the side surface within machining area of the connection surface contacts cutting tool during machining and causes lateral load and vibration.

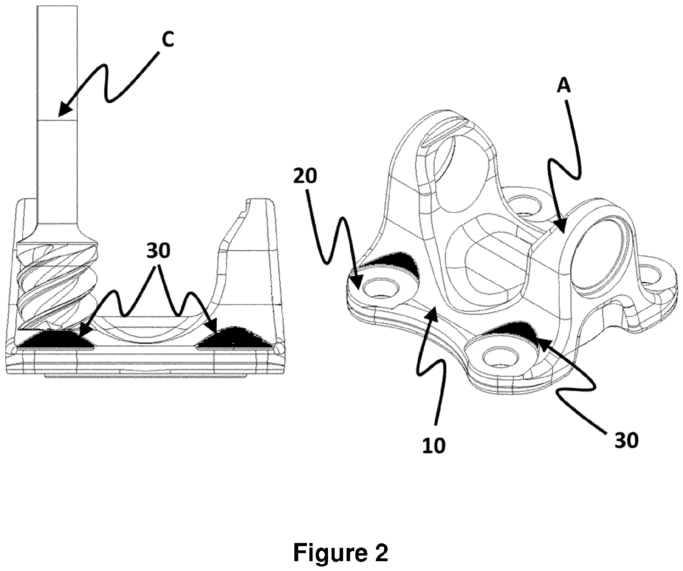

Figure 2 shows perspective and detail view of flange yoke (A) with Prior Art during machining. Accordingly, during material removal from the connection surface (20) on the unmachined forged flange yoke (A) in Prior Art, cutting tool (C) contacts side surface (30). Due to this contact, when ground surface of the cutting tool (C) removes material from the connection surface (20), its side surface removes material from the side surface (30) with every rotation of the cutting tool (C). During this process, the cutting tool (C) which is exposed to both vertical and horizontal load operates under unbalanced operation load and thus pluse and vibration are formed during machining. As a reason of this pulse and vibration caused by contact with side surface (30), there is failure risk for the cutting tool (C). When it is desired to reduce failure risk of cutting tool (C), it is required to decrease cutting and progression speed of the tool which extends the duration of flange yoke's (A) operation on machine tools. This decreases the amount of parts produced in unit of time and increases the amount of cutting fluid used during machining because of the extended machining times.

Disposal costs of cutting fluid, a chemical waste, increase and production costs per unit increase.

When process is performed using optimum cutting and progressing speeds defined for cutting tool (C), it cannot be possible to produce the connection surface (20) with desired surface quality as a result of the vibration generated by the effect of vertical and horizontal loads on the tools. The flanged yoke (A) which does not have required surface quality becomes scrap at the end of machining process and causes labor and material losses.

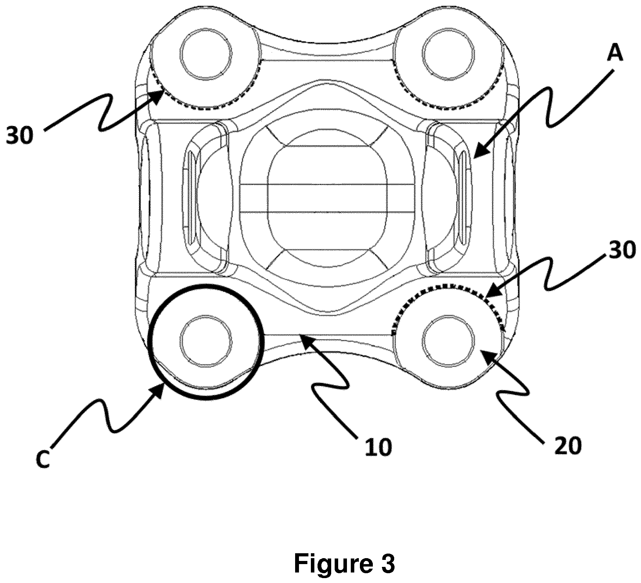

Figure 3 shows upper view of machined flange yoke (A) with Prior Art. Accordingly, cutting diameter of the cutting tool (C) is chosen to be equal to the seating surface formed by the connection surface (20) to be used for assembly. Cutting tool (C) removes materials from side surface (30) due to its cutting diameter while machining connection surface (20). This material removing process, almost half of the cutting tool (C) contacts side surface (30) and the other half remains disengaged which causes vibration on flange yoke (A) and cutting tool (C). As a result of this vibration, cutting tool (C) is exposed to shocks which causes risk of failure and inability to produce connection surface (20) of flange yoke (A) in required quality. It is not possible to use flange yoke with improper surface quality, therefore it becomes scrap.

As a result, due to above defined negative consequences and inadequacy of current solutions required a development in relevant technical field.

### Object of the Invention

The invention is inspired from current situations and aims to resolve above mentioned negative consequences.

Main purpose of the invention is to provide better machinability for the drive shaft thanks to the discharge zone formed on the side surface of the flange yoke where drive shaft is mounted.

Another purpose of the invention is to improve the design of flange yoke side surface to prevent pulsed and vibrated operation of the cutting tools to improve their life and cutting parameters.

Another purpose of the invention is to prevent flange yoke becoming scrap by improving the machined surface quality connection surface.

Another purpose of the invention is to reduce unit part production time by improving side surface design and increasing cutting tool cutting speed and progression values.

Another purpose of the invention is to reduce machine tools cutting fluid consumption during machining, and reduce cutting fluid disposal costs by improving side surface design.

The invention, intending to realize all above mentioned purposes and aims which shall arise in connection with below detailed explanations, is about the flange yoke which connects the drive shaft on the vehicle via connection surfaces formed by machining its assembly bases. The invention characterized by comprising surface discharges formed on flange yoke side surfaces not to allow the cutting tool to contact cutting diameter during machining of mentioned connection surfaces.

The structural features and characteristics of the invention as well as all its advantages might be better understood with below given figures and the detailed explanation referring to these figures; therefore, evaluation should be performed considering these figures and detailed explanations.

### Brief Description of Figures

**Figure 1**, perspective view of machined flange yoke which is the subject of the invention.
**Figure 2**, perspective and side view of flange yoke with Prior Art during machining.
**Figure 3**, shows upper view of machined flange yoke with Prior Art.
**Figure 4**, view of the flange yoke which is the subject of the invention with Prior Art and its comparative view new design following machining.
**Figure 5**, view of the flange yoke which is the subject of the invention assembled on the prop shaft.

Drawings should not necessarily be scaled and details which are not required to understand the invention might be neglected. Besides, components which are at least identical to a large extent or which have at least functions to a large extent are indicated with the same number.

### Description of Part References

A. Flange yoke
   10. Assembly base
   20. Connection surface
   30. Side surface
   31. Surface discharge
B. Propshaft
C. Cutting tools

### Detailed Description of the Invention

In this detailed explanation, preferred construction of the flange yoke (A) is explained to better understand the subject in a manner not constituting any limiting impact.

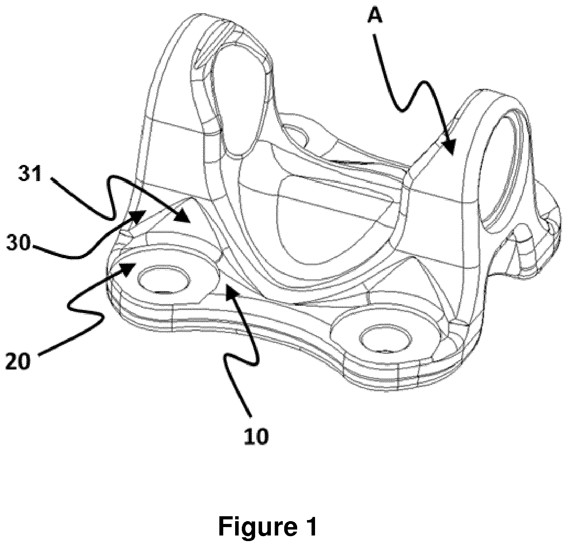

Figure 1 shows perspective view of machined flange yoke (A) which is the subject of the invention. According to the invention with its most basic features; removal of material from the connection surface (20) formed by machining on the assembly base (10) and used for connection of the flange yoke (A) on the vehicle following its assembly on the drive shaft (B), is performed by cutting tools (C). During machining of connection surface (20), surface discharges (31) are formed to prevent contact of side surface (30) with cutting tool (C). Thus, lateral load on the cutting tool (C) is removed, vibration and shock arising during machining are prevented, the connection surface (20) is produced in required surface quality.

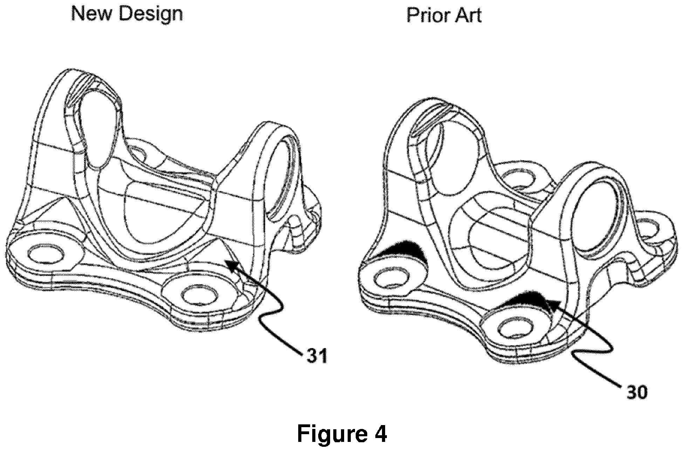

Figure 4, shows flange yoke (A) which is the subject of the invention with Prior Art and its comparative view with machined new design. Accordingly, shocks and vibrations to be exposed by cutting tools (C) while machining the connection surface (20) shall be prevented allowing balanced material removal from the connection surface (20). Cutting tool (C) shall not contact side surface (30) thanks to surface discharge (31), shall not be exposed to shocks and vibration, and thus-failure risk shall be minimized, service life of tools shall be extended; approach, cutting and progressing speed of cutting tools (C) shall also be increased improving unit machining time of flange yoke (A). By improving cutting parameters, considerable improvement shall be gained in surface quality of the connection surface (20. As a result of shortening unit part machining time consumption of cutting fluid per part on machining equipment shall be decreased. As a result of this, disposal costs of cutting fluid, which is a chemical waste, shall be reduced. As a result of these improvements obtained in machining operations, unit part costs shall be reduced.

The side surface (30) exposed to surface discharge (31) as to be distant from the end of connection surface (20) in order to prevent contact with cutting tool (30) during machining constitutes new design of the flange yoke (A). Thus, material weight of flange yoke (A) is decreased and raw material cost is improved. Besides, since total material weight of the flange yoke (A) manufactured by forging method shall decrease, the amount of material to be heated prior to forging shall also decrease leading to savings in operating time and energy costs of the furnace. The decrease in raw part weights increases the number of flange yokes (A) in a delivery batch. All mentioned improvements provides reduction in unit part costs.

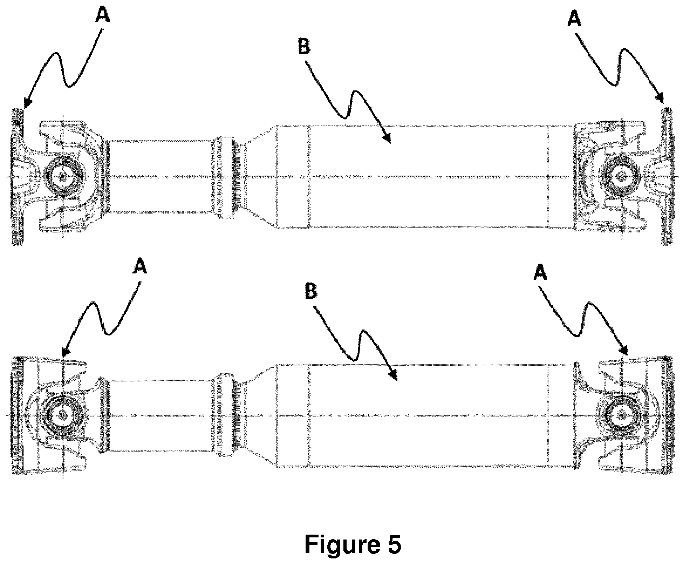

Figure 5, shows view of the flange yoke (A) which is the subject of the invention assembled on the drive shaft. Accordingly, the drive shaft (B) assembled on the flange yoke (A) from both ends is connected to the vehicle from four connection surfaced on the flange yoke (20) by bolts and thus transfers the rotational motion it receives from the transmission to the differential.

## Claims

1. The flange yoke (A) attaching the propshaft (B), which provides the rotational motion and power transmission between transmission and differential in motor vehicles, over the vehicle via connection surfaces (20) formed by machining assembly bases (10) by cutting tools (C) **characterized by comprising** ; surface discharges (31) on side surfaces (30) as to be distant from the end of said connection surface (20) in order to prevent contact with cutting diameter during machining constitutes of the flange yoke (A).
